(19) Europäisches Patentamt
European Patent Office
Office européen des brevets

(11) **EP 3 824 360 B1**

(12) **EUROPÄISCHE PATENTSCHRIFT**

(45) Veröffentlichungstag und Bekanntmachung des Hinweises auf die Patenterteilung:
**27.07.2022 Patentblatt 2022/30**

(21) Anmeldenummer: **19734333.8**

(22) Anmeldetag: **24.06.2019**

(51) Internationale Patentklassifikation (IPC):
**G05B 19/41** (2006.01)

(52) Gemeinsame Patentklassifikation (CPC):
**G05B 19/41; G05B 19/4103;** G05B 2219/34098;
G05B 2219/34156; G05B 2219/42209;
G05B 2219/49284

(86) Internationale Anmeldenummer:
**PCT/EP2019/066604**

(87) Internationale Veröffentlichungsnummer:
**WO 2020/015951 (23.01.2020 Gazette 2020/04)**

(54) **VERFAHREN ZUM ERMITTELN EINER GROBBAHN AUS EINER VORGEGEBENEN KONTUR**

METHOD FOR DETERMINING A ROUGH TRAJECTORY FROM A PREDETERMINED CONTOUR

PROCÉDÉ DE DÉTERMINATION D'UNE TRAJECTOIRE APPROXIMATIVE À PARTIR D'UN CONTOUR PRÉDÉFINI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.07.2018 DE 102018117244**

(43) Veröffentlichungstag der Anmeldung:
**26.05.2021 Patentblatt 2021/21**

(73) Patentinhaber: **KEBA Industrial Automation Germany GmbH**
**35633 Lahnau (DE)**

(72) Erfinder: **SAFFERT, Eugen**
**35633 Lahnau (DE)**

(74) Vertreter: **Spachmann, Holger**
**Stumpf Patentanwälte PartGmbB**
**Alte Weinsteige 73**
**70597 Stuttgart (DE)**

(56) Entgegenhaltungen:
**DE-A1-102005 061 570**

EP 3 824 360 B1

**Beschreibung**

Die vorliegende Erfindung betrifft ein Verfahren zum Ermitteln einer Grobbahn aus einer vorgegebenen Kontur für ein Ansteuern einer Bearbeitungsmaschine, welche zumindest zwei zueinander redundante Antriebsvorrichtungen zum Ausführen sich überlagernder Bewegungen aufweist.

## STAND DER TECHNIK

Derartige Bearbeitungsmaschinen werden beispielsweise beim Fräsen, Laserschneiden, Wasserstrahlschneiden oder Gravieren von Holz-, Metall- oder Kunststoffwerkstücken oder als Zeichenmaschinen (Plotter) eingesetzt, um Werkstücke oder Zeichenlinien mit einer vorgegebenen zwei- oder dreidimensionalen Kontur herstellen zu können. Mithilfe der Antriebsvorrichtungen kann ein feststehendes oder auch ein bewegtes, insbesondere ein rotierendes Werkzeug entlang der vorgegebenen Kontur bewegt werden, so dass das Werkstück nach vollendeter Bearbeitung eine gewünschte Endkontur aufweist.

Je nach Verlauf der gewünschten Endkontur muss das Werkzeug oftmals innerhalb kurzer Zeit längere Wegstrecken zurücklegen und ist dadurch auch starken Beschleunigungs- und/oder Verzögerungskräften ausgesetzt. Bearbeitungsmaschinen, die lediglich eine einzige Antriebsvorrichtung für jede gewünschte Bewegungsrichtung des Werkzeugs aufweisen, gelangen hier schnell an ihre Leistungsgrenzen. Um die Geschwindigkeits- und/oder Beschleunigungsgrenzen der Antriebsvorrichtung einzuhalten, muss oftmals die Bearbeitungsgeschwindigkeit unter ein akzeptables Maß gesenkt werden.

Um dies zu vermeiden, werden sogenannte redundante Antriebsvorrichtungen für jede Bewegungsrichtung der Bearbeitungsmaschine eingesetzt. Hierfür ist zum einen ein niederdynamischer Antrieb vorgesehen, welcher relativ große Verfahrwege zurücklegen kann, aufgrund einer höheren Masse jedoch nur eine geringe Bewegungsdynamik aufweist. Zusätzlich ist ein zweiter, hochdynamischer Antrieb vorgesehen, welcher einerseits mittels des niederdynamischen Antriebs verfahren werden kann, und welcher andererseits in der Lage ist, das Werkzeug mit hoher Geschwindigkeit und hoher Beschleunigung bzw. Verzögerung zu verfahren, wobei jedoch der maximale Verfahrweg der hochdynamischen Antriebsvorrichtung in der Regel beschränkt ist.

Um eine solche Bearbeitungsmaschine mit redundanten Antriebsvorrichtungen für eine jeweilige Bewegungsrichtung ansteuern zu können, ist es üblich, die Kontur, mit welcher das Werkstück bearbeitet werden soll, in eine Grobbahn und eine Feinbahn aufzuteilen. Der niederdynamische Antrieb wird hierbei mit den Daten der Grobbahn angesteuert, während gleichzeitig der hochdynamische Antrieb mit den Daten der Feinbahn angesteuert wird.

Eine solche Aufteilung der Kontur in eine Grobbahn und eine Feinbahn und eine entsprechende Ansteuerung der Bearbeitungsmaschine ist grundsätzlich bekannt und ist beispielsweise in DE 103 55 614 B4 und EP 0 594 699 B1 beschrieben. Bei der Berechnung der Grobbahn ist zumindest der begrenzte Verfahrweg des hochdynamischen Antriebs zu berücksichtigen, da ansonsten eine fehlerhafte Bearbeitung des Werkstücks erfolgen würde. Vorteilhafterweise werden auch weitere limitierende Parameter bei der Bahnberechnung berücksichtigt. Dies hat in der Regel zur Folge, dass die Grobbahn eher niederfrequente Bewegungsanteile umfasst, während die Feinbahn hochfrequente Bewegungsanteile aufweist. In der Regel verläuft die Berechnung der Grobbahn und der Feinbahn derart, dass zunächst eine Grobbahn ermittelt wird und anschließend die Feinbahn durch Subtraktion der Grobbahn von der Kontur bestimmt wird.

Ein weiteres Ermittlungsverfahren für eine lagegeführt abzufahrende Grobbahn ist in EP 1 963 935 B1 beschrieben. Einem Rechner wird hierbei eine lagegeführt abzufahrende Anfangsbahn vorgegeben, wobei die Anfangsbahn durch eine Anfangsfunktion beschrieben ist, so dass durch Einsetzen eines skalaren Bahnparameters in die Anfangsfunktion jeweils eine korrespondierende Position auf der Anfangsbahn bestimmt ist, wobei der skalare Bahnparameter von der Zeit verschieden ist und für einen entlang der Anfangsbahn zurückgelegten Weg charakteristisch ist. Der Rechner unterzieht die Anfangsbahn als Funktion des skalaren Bahnparameters einer Filterung mit Tiefpasscharakteristik und ermittelt so eine Grobfunktion, so dass durch Einsetzen des skalaren Bahnparameters in die Grobfunktion jeweils eine korrespondierende Position auf der Grobbahn bestimmt ist. Die Tiefpasscharakteristik ist hier auf den skalaren Bahnparameter bezogen. Der Rechner ermittelt die Grobfunktion derart, dass der Abstand der Grobbahn von der Anfangsbahn unabhängig vom Wert des skalaren Bahnparameters stets unterhalb einer vorbestimmten Schranke liegt.

Mit anderen Worten wird in EP 1 963 935 B1 ein Verfahren zur Berechnung einer Grobfunktion, die von einem niederdynamischen Antrieb abzufahren wäre, vorgeschlagen, die dadurch berechnet wird, dass eine von einem Streckenparameter abhängige Anfangsbahn in Bezug auf diesen Streckenparameter tiefpassgefiltert wird. Die tiefpassgefilterte Funktion wird dahin gehend überprüft, ob ein Abstand dieser Funktion zu der Anfangsbahn über den gesamten Bereich des Streckenparameters unterhalb einer vorbestimmten Schranke liegt. Gegebenenfalls können ausgehend von der tiefpassgefilterten Funktion weitere Vergröberungen nach und nach vorgenommen werden, um die Grobbahn zu ermitteln, solange die vorgenannte Schranke eingehalten bleibt.

In der Dissertation "Steuerung von Werkzeugmaschinen mit redundanten Achsen" des Herren Marco Bock aus dem Fachbereich Mathematik und Informatik, Physik, Geographie der Justus-Liebig-Universität Gießen, vorgelegt im August 2010 (http://qeb.unigiessen.de/geb/volltexte/2011/7970/pdf/BockMarco 2010 11 19.pdf) sind verschiedene weitere Verfahren zur Ermittlung einer Grobbahn aus einer vorgegebenen Kontur für die Ansteuerung einer Bearbeitungsmaschine beschrieben.

Gemäß einem ersten Ausführungsbeispiel können zur Ermittlung der Grobfunktion zunächst erste charakteristische Zwischenvektoren mit Kontrollpunkten einer Spline-Darstellung der Anfangsbahn ermittelt werden. Darauf aufbauend können zweite charakteristische Zwischenvektoren aus den ersten charakteristischen Zwischenvektoren der Spline-Darstellung ermittelt werden, die Kontrollpunkte enthalten und die eine zweite Zwischenbahn definieren. Die Kontrollpunkte können durch eine gewichtete oder ungewichtete Mittelwertbildung von je zwei unmittelbar aufeinanderfolgenden Zwischenvektoren der ersten Sequenz ermittelt werden. Darauf aufbauend können in entsprechender Weise dritte Zwischenvektoren berechnet werden. Nach dieser zweimaligen Bestimmung der Zwischenbahn muss nun ermittelt werden, ob ein geometrischer Abstand der Zwischenbahn als Grobfunktion von der Anfangsbahn unterhalb der vorgegebenen Schranke entlang des Bahnparameters liegt. Dazu können vereinfacht die Spline-Vektoren der Anfangsbahn mit den Spline-Vektoren der Zwischenbahn der Grobfunktion verglichen werden, wobei der Maximalwert dieser Abstände eine obere Abstandsgrenze ergibt, der wiederum mit der Schranke auf einer Einhaltung des vorgegebenen Kriteriums verglichen werden kann.

In einem zweiten Ausführungsbeispiel können ausgehend von einer Spline-Darstellung der Anfangsfunktion für eine Vielzahl von Skalarwerten des Bahnparameters jeweilige Bahnpositionen auf der Anfangsbahn ermittelt werden. Aus diesen Wertepaaren wird eine erste Zwischenbahn durch die vorgenannte Abtastung definiert. Eine zweite Zwischenbahn der Grobfunktion innerhalb des Intervalls des skalaren Bahnparameters durch gewichtete oder ungewichtete Mittelwertbildung der Positionen auf der ersten Zwischenbahn bestimmt werden. Die zweite Zwischenbahn kann hinsichtlich einer Einhaltung der Schranke mit der Anfangsbahn oder mit der ersten abgetasteten Zwischenbahn unter Berücksichtigung einer Hilfsschranke verglichen werden.

Abhängig von der vorgegebenen Kontur kann der Fall eintreten, dass die bekannten Bahnzerlegungsverfahren keine zufriedenstellenden Ergebnisse liefern können. Unter Umständen können die bekannten Verfahren sehr rechenintensiv sein und eine entsprechend lange Rechenzeit benötigen. Auch ist es denkbar, dass die aus der Bahnzerlegung resultierende Bearbeitungszeit nicht den physikalischen Möglichkeiten der Bearbeitungsmaschine entspricht und somit verlängert ist.

Es ist daher die Aufgabe der Erfindung, ein Verfahren der eingangs genannten Art anzugeben, welches gegenüber bekannten Verfahren verbessert ist.

OFFENBARUNG DER ERFINDUNG

Die Lösung der Aufgabe erfolgt durch ein Verfahren mit den Merkmalen des Anspruchs 1. Vorteilhafte Ausführungsformen sind in den abhängigen Ansprüchen angegeben.

Es wird ein Verfahren zum Ermitteln einer Grobbahn aus einer vorgegebenen Kontur für ein Ansteuern einer Bearbeitungsmaschine vorgeschlagen, welche zumindest zwei zueinander redundante Antriebsvorrichtungen zum Ausführen sich überlagernder Bewegungen aufweist, wobei die Kontur durch eine Konturfunktion bestimmt ist, welche abschnittsweise zumindest durch aufsteigend indizierte Konturknotenpunkte Po bis $P_{n+1}$ und den Konturknotenpunkten Po bis $P_{n+1}$ zugeordnete Konturabschnittsfunktionen po bis $p_n$ definiert ist und einen Konturstartknotenpunkt $P_0$ aufweist, wobei die Grobbahn durch eine Grobbahnfunktion bestimmt ist, welche abschnittsweise zumindest durch aufsteigend indizierte Grobbahnknotenpunkte $Q_0$ bis $Q_{n+1}$ definiert ist und einen Grobbahnstartknotenpunkt $Q_0$ aufweist, wobei anfangs der Grobbahnstartknotenpunkt $Q_0$ gleich dem Konturstartknotenpunkt Po gesetzt wird und nachfolgend ausgehend von einem jeweiligen Ausgangsgrobbahnknotenpunkt $Q_j$ und beginnend bei dem Grobbahnstartknotenpunkt $Q_0$ eine Iteration durchgeführt wird, bei welcher

- in einem ersten Iterationsschritt aus den Konturknotenpunkten $P_j$ bis $P_{n+1}$, deren Indexwert k gleich oder höher wie der Indexwert j des jeweiligen Ausgangsgrobbahnknotenpunkts Qj ist, derjenige Konturknotenpunkt $P_k$ mit kleinstmöglichem Indexwert k ermittelt wird, dessen Abstand von dem Ausgangsgrobbahnknotenpunkt Qj gerade noch eine vorgegebene Abstandsbedingung erfüllt, und

- in einem zweiten Iterationsschritt ein auf den jeweiligen Ausgangsgrobbahnknotenpunkt Qj folgender jeweiliger Folgegrobbahnknotenpunkt $Q_{j+1}$ ermittelt wird, der auf einer Verbindungslinie zwischen dem jeweiligen Ausgangsgrobbahnknotenpunkt $Q_j$ und dem im ersten Iterationsschritt ermittelten Konturknotenpunkt $P_k$ liegt, oder auf einer Verbindungslinie zwischen dem jeweiligen Ausgangsgrobbahnknotenpunkt Qj und einem Schwerpunkt der Abschnittskontur zwischen $P_j$ zu $P_k$ liegt, und dessen Abstand von dem Ausgangsgrobbahnknotenpunkt Qj dem mit einem Faktor gewichteten Abstand des im ersten Iterationsabsch nitt ermittelten Konturknotenpunkts $P_k$ von dem Ausgangsgrobbahnknotenpunkt Qj entspricht, wobei sich der Faktor ergibt aus dem Quotienten aus der Bahnlänge $s_j$ derjenigen Konturabschnittsfunktion $p_j$, deren Indexwert j gleich dem Indexwert j des jeweiligen Ausgangsgrobbahnknotenpunkts Qj ist, und der Summe der Bahnlängen $s_j$ bis $s_{k-1}$ der Konturabschnittsfunktionen $p_j$ bis $p_{k-1}$

zwischen dem Konturknotenpunkt $P_j$, deren Indexwert j gleich dem Indexwert j des jeweiligen Ausgangsgrobbahnknotenpunkt Qj ist und dem im ersten Iterationsschritt ermittelten Konturknotenpunkt $P_k$.

Das vorgeschlagene Verfahren ist sehr einfach aufgebaut und liefert bereits nach einem ersten Durchgang ein endgültiges Ergebnis für die Grobbahn. Mehrfache Wiederholungen der Berechnungen sind nicht erforderlich. Eine Umrechnung oder Umparametrierung der Kontur oder Ausgangsbahn in eine von einem skalaren Bahnparameter abhängige Form ist ebenfalls nicht erforderlich, wodurch gegenüber bekannten Lösungen bereits zu Beginn Rechenzeit eingespart werden kann.

Dem Verfahren liegt der überraschend einfache Gedanke zugrunde, ausgehend von einem Anfangspunkt der ursprünglichen Kontur die Grobbahn iterativ, d. h. Knotenpunkt für Knotenpunkt, zu konstruieren. Ausgehend von dem Startknotenpunkt der Kontur bzw. einem in einer vorhergehenden Iteration berechneten Grobbahnknotenpunkt $Q_j$ wird ein nachfolgender Folgegrobbahnknotenpunkt $Q_{j+1}$ ermittelt. Hierfür wird um den Grobbahnstartknotenpunkt bzw. den Ausgangsgrobbahnknotenpunkt $Q_j$ ein Fenster gelegt, so dass alle Punkte, die innerhalb dieses Fensters liegen, die genannte vorgegebene Abstandsbedingung erfüllen. Diese Abstandsbedingung orientiert sich vorteilhafterweise an dem maximalen Verfahrweg des hochdynamischen Antriebs, um zu gewährleisten, dass mittels der Feinbahn, welche ja die Differenz zwischen der Kontur und der Grobbahn darstellt, tatsächlich auch alle Zielpunkte entsprechend der Kontur angefahren werden können.

Ausgehend von dem Ausgangsgrobbahnknotenpunkt Qj wird derjenige Knotenpunkt $P_k$ der Kontur ermittelt, der sich gerade noch innerhalb dieses Fensters befindet, d. h. der nächstfolgende Knotenpunkt $P_{k+1}$ der Kontur, also derjenige Knotenpunkt mit einem um eins höheren Indexwert, würde sich bereits außerhalb dieses Fensters befinden. Praktischerweise wird der erste folgende Punkt $P_{k+1}$ ermittelt, der die Abstandsbedingung nicht mehr erfüllt, und dann wird der vorangegangene Punkt als Punkt $P_k$ ausgewählt.

Wenn dieser Konturknotenpunkt $P_k$ aufgefunden wurde, wird eine gedachte Linie von dem Ausgangsgrobbahnknotenpunkt Qj zu dem aufgefundenen Konturknotenpunkt $P_k$ gezogen, wobei sich der neu zu ermittelnde Folgegrobbahnknotenpunkt $Q_{j+1}$ auf dieser Verbindungslinie befinden muss.

Alternativ kann die gedachte Linie auch von dem Ausgangsgrobbahnknotenpunkt $Q_j$ zu einem Schwerpunkt der Abschnittskontur vom Konturknotenpunkt $P_j$ zum Konturknotenpunkt $P_k$ gezogen werden, wobei sich der neu zu ermittelnde Folgegrobbahnknotenpunkt $Q_{j+1}$ auf dieser Verbindungslinie befinden muss. Der Schwerpunkt kann beispielsweise durch eine geometrisch Schwerpunktsbildung des Konturabschnitts der Ausgangskontur zwischen einem Konturpunkt $P_j$, der dem Ausgangsgrobbahnknotenpunkt $Q_j$ zugeordnet ist, bzw. diesem geometrisch am nächsten liegt, und dem gerade noch das Abstandskriterium erfüllenden Konturpunkt $P_k$ ermittelt werden. Dies kann im einfachsten Fall der Mittelpunkt des Konturabschnitts zwischen $P_j$ bis $P_k$ sein, aber auch ein geometrischer Schwerpunkt aller dazwischenliegenden Konturpunkte $P_j$, $P_{j+1...}$ bis $P_k$ auf diesem Konturabschnitt. Ein so, oder auch nach einer anderen Vorschrift gebildeter Schwerpunkt dient zur Festlegung der vom Ausgangsgrobbahnknotenpunkt $Q_j$ ausgehenden gedachten Linie, auf die der Folgegrobbahnknotenpunkt $Q_{j+1}$ allokiert wird.

Insofern kann ausgehend vom Ausgangsgrobbahnknotenpunkt Qj der nächste Ausgangsgrobbahnknotenpunkt $Q_{j+1}$ entweder einer langestreckten Kontur folgen, in dem dieser in Richtung des am weitest entfernten Punkt $P_k$ liegt, oder in Richtung eines Konturschwerpunkts liegen, was sich insbesondere für stark wellige oder verwinkelte Konturen anbietet.

Der zur eindeutigen Definition des Folgegrobbahnknotenpunkts $Q_{j+1}$ erforderliche Abstand von dem Ausgangsgrobbahnknotenpunkt Qj wird durch den Abstand des aufgefundenen Konturknotenpunkts $P_k$ von dem Ausgangsgrobbahnknotenpunkt $Q_j$ bestimmt, wobei dieser Abstand mit einem Faktor gewichtet wird, welcher sich durch den Quotienten aus der Bahnlänge $s_j$ der Konturabschnittsfunktion $p_j$ ergibt, deren Indexwert j gleich dem Indexwert j des dem jeweiligen Suchvorgang zugrunde liegenden Ausgangsgrobbahnknotenpunkts Qj entspricht, und der Summe S der Bahnlängen $s_j$ bis $s_{k-1}$ der Konturabschnittsfunktionen $p_j$ bis $p_{k-1}$ zwischen dem Konturknotenpunkt $P_j$, dessen Indexwert j dem Indexwert j des zugrunde liegenden Ausgangsbahnknotenpunkts Qj entspricht, und dem aufgefundenen Konturknotenpunkt $P_k$.

Der auf diese Weise ermittelte Folgegrobbahnknotenpunkt $Q_{j+1}$ wird in einer nachfolgenden Iteration zu dem neuen Ausgangsgrobbahnknotenpunkt.

Im Unterschied zum Stand der Technik wird bei dem erfindungsgemäßen Verfahren keine Tiefpassfilterung durch eine gewichtete oder ungewichtete Mittelwertbildung von einzelnen Werten vorgenommen. Zudem ist eine Überprüfung, ob der Abstand der Grobbahn von der Kontur unabhängig von einem Wert eines skalaren Bahnparameters stets unterhalb einer vorbestimmten Schranke liegt, nicht vorgesehen und auch nicht erforderlich, da bereits die Auswahl der Folgegrobbahnknotenpunkte bei jedem Iterationsschritt gewährleistet, dass der maximale Verfahrweg der hochdynamischen Antriebsvorrichtung nicht überschritten wird.

An dieser Stelle wird angemerkt, dass die genannte Kontur, welche die Grundlage der erfindungsgemäßen Bahnzerlegung darstellt, nicht zwingend die Endkontur des zu bearbeitenden Werkstücks darstellen muss. Gegebenenfalls kann hier noch zusätzlich ein Materialabtrag berücksichtigt werden, der beispielsweise durch das Werkzeug verursacht ist. So kann beispielsweise bei der Verwendung eines Fräsers der Durchmesser des Fräskopfs berücksichtigt werden.

Vorteilhafterweise ist die Konturfunktion ein Spline, insbesondere ein Spline ersten, dritten oder fünften Grades. Derartige Beschreibungen werden üblicherweise zum Beispiel in CNC-Bearbeitungsverfahren benutzt, wobei in der Regel Kreise durch einen Spline fünften Grades beschrieben werden.

Gemäß einer vorteilhaften Ausgestaltung der Erfindung umfasst die vorgegebene Abstandsbedingung zumindest eine erste und eine zweite Abstandsteilbedingung, wobei der zu ermittelnde Konturknotenpunkt $P_k$ zumindest eine der Abstandsteilbedingungen erfüllen muss, wobei die erste Abstandsteilbedingung umfasst, dass für den zu ermittelnden Konturknotenpunkt $P_k$ die Summe der Bahnlängen $s_j - s_k$ zwischen dem Konturknotenpunkt $P_j$, dessen Indexwert j gleich dem Indexwert j des jeweiligen Ausgangsgrobbahnknotenpunkts $Q_j$ ist, und dem zu ermittelnden Konturknotenpunkt $P_k$ kleiner oder gleich einem vorbestimmten Grenzwert $\Delta$ ist und die Summe der Bahnlängen $s_j - s_{k+1}$ zwischen dem Konturknotenpunkt $P_j$, dessen Indexwert j gleich dem Indexwert j des jeweiligen Ausgangsgrobbahnknotenpunkt Qj ist, und dem auf den zu ermittelnden Konturknotenpunkt $P_k$ unmittelbar folgenden Konturknotenpunkt $P_{k+1}$ größer als der vorbestimmte Grenzwert $\Delta$ ist, und wobei die zweite Abstandsteilbedingung umfasst, dass für den zu ermittelnden Konturknotenpunkt $P_k$ der Abstand zwischen dem Konturknotenpunkt $P_j$, dessen Indexwert j gleich dem Indexwert j des jeweiligen Ausgangsgrobbahnknotenpunkt $Q_j$ ist, und dem jeweiligen Ausgangsgrobbahnknotenpunkt Qj kleiner oder gleich der Hälfte des vorbestimmten Grenzwerts $\Delta$ ist und der Abstand zwischen dem auf den zu ermittelnden Konturknotenpunkt $P_k$ unmittelbar folgenden Konturknotenpunkt $P_{k+1}$ und dem jeweiligen Ausgangsgrobbahnknotenpunkt $Q_j$ größer als die Hälfte des vorbestimmten Grenzwerts $\Delta$ ist.

Der vorbestimmte Grenzwert $\Delta$ orientiert sich, wie vorstehend bereits erwähnt, sinnvollerweise an dem Verfahrweg der hochdynamischen Antriebsvorrichtung. Während die erste Abstandsteilbedingung eine Schranke für die Bahnlängen der ursprünglichen Kontur definiert, definiert die zweite Abstandsteilbedingung anschaulich gesagt die Größe des jeweiligen Suchfensters.

Regelmäßig wird für einen Verfahrensdurchlauf nur eine der beiden vorgenannten Bedingungen für alle Iterationsschritte einheitlich gewählt, wobei die Bedingung im Vorhinein ausgewählt oder anhand von Charakteristika der Kontur initial gewählt werden kann. Allerdings kann auch eine Kombination beider Bedingungen für einen Verfahrensablauf eingesetzt werden. Weiterhin ist denkbar, abschnittsweise die erste Bedingung und die zweite Bedingung einzusetzen Sofern die beiden Abstandsteilbedingungen unterschiedliche Konturknotenpunkte $P_k$ auffinden, können zusätzliche Bedingungen festgelegt werden, anhand denen entschieden werden kann, welcher der beiden Punkte ausgewählt werden soll.

Wenn im Falle der ersten Abstandsteilbedingung kein Punkt aufgefunden werden kann, welcher die Bedingung erfüllt, oder falls der aufgefundene Konturknotenpunkt den gleichen Indexwert j besitzt wie der Ausgangsgrobbahnknotenpunkt $Q_j$, so wird der Konturknotenpunkt $P_{j+1}$ als zu ermittelnder Konturknotenpunkt $P_k$ ausgewählt. Bei dem in der zweiten Abstandsteilbedingung genannten Abstand muss es sich nicht zwingend um einen Abstand gemäß der euklidischen Norm handeln, sondern es können auch andere Normen, beispielsweise die Maximumsnorm oder die Zeilensummennorm zugrunde gelegt werden. Bei Verwendung der euklidischen Norm hat das vorstehend genannte Suchfenster die Form eines Kreises, während bei Verwendung der Maximumsnorm das Suchfenster rechteckig, insbesondere quadratisch ist. Da üblicherweise die Verfahrwege in den verschiedenen Bewegungsrichtungen der hochdynamischen Antriebsvorrichtung unabhängig voneinander sind, bietet es sich an, den Abstand gemäß der Maximums- bzw. Zeilensummennorm zu definieren.

Gemäß einer weiteren vorteilhaften Ausgestaltung ist die Grobbahnfunktion ferner durch jeweilige den Grobbahnknotenpunkten $Q_0 - Q_{n+1}$ zugeordnete Grobbahnabschnittsfunktionen $q_0 - q_n$ definiert, wobei in dem zweiten Iterationsschritt die jeweilige dem Ausgangsgrobbahnknotenpunkt Qj zugeordnete Grobbahnabschnittsfunktion $q_j$ durch eine lineare Funktion gebildet wird. Somit verbinden die Grobbahnabschnittsfunktionen $q_0 - q_n$ die Grobbahnknotenpunkte $Q_0 - Q_{n+1}$ durch jeweilige Geraden.

Gemäß einer alternativen Ausgestaltung ist es auch möglich, dass die Grobbahnfunktion ferner durch jeweilige den Grobbahnknotenpunkten $Q_0$ bis $Q_{n+1}$ zugeordneten Grobbahnabschnittsfunktionen $q_0$ bis $q_n$ definiert ist, welche mittels einer Spline-Interpolation der Grobbahnknotenpunkte $Q_0$ bis $Q_{n+1}$ erzeugt worden ist. Vorteilhafterweise wird hier ein Spline dritten oder höheren Grades verwendet. Während die vorstehend genannten linearen Funktionen ebenfalls im Rahmen der Iteration ermitteln werden können, ist es für die Ermittlung der Grobbahnabschnittsfunktionen unter Umständen sinnvoll, die Spline-Interpolation erst nach der Ermittlung der Grobbahnknotenpunkte durchzuführen.

<u>ZEICHNUNGEN</u>

Weitere Vorteile ergeben sich aus der Zeichnung und der zugehörigen Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigt:

**Fig.** 1 eine schematische Darstellung einer Iteration eines erfindungsgemäßen Verfahrens zum Ermitteln einer Grobbahn, und

Fig. 2 eine schematische Darstellung einer vorgegebenen Kontur und einer mittels des erfindungsgemäßen Verfahrens ermittelten zugehörigen Grobbahn.

Das erfindungsgemäße Verfahren wird nachfolgend beispielhaft anhand einer Bahnzerlegung einer zweidimensionalen Kontur beschrieben, die in einer Ebene (X, Y) definiert ist, wobei selbstverständlich eine Verallgemeinerung auf andere Dimensionen möglich ist. Die Bahnzerlegung erfolgt beispielsweise für eine Bearbeitungsmaschine, welche für jede Bewegungsrichtung zwei redundante Antriebsvorrichtungen aufweist. Die Kontur kann beispielsweise durch Splines ersten, dritten oder fünften Grades beschrieben sein, wie es für den Betrieb von CNC-Bearbeitungsmaschinen üblich ist. Es können jedoch auch andere Beschreibungen der Kontur vorliegen.

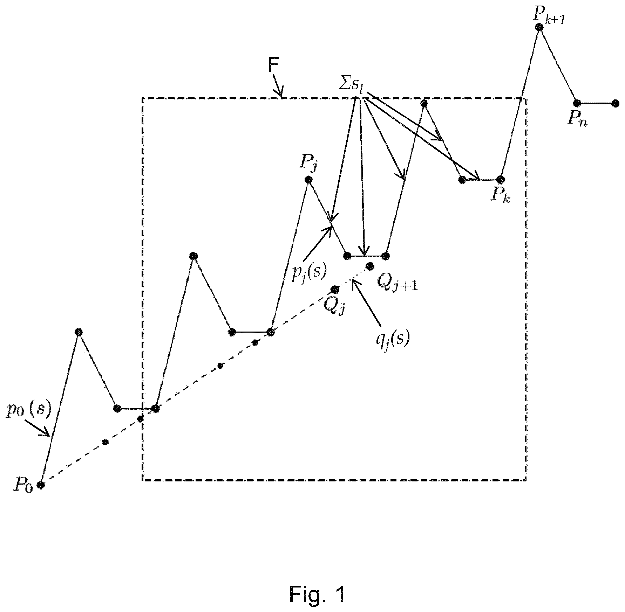

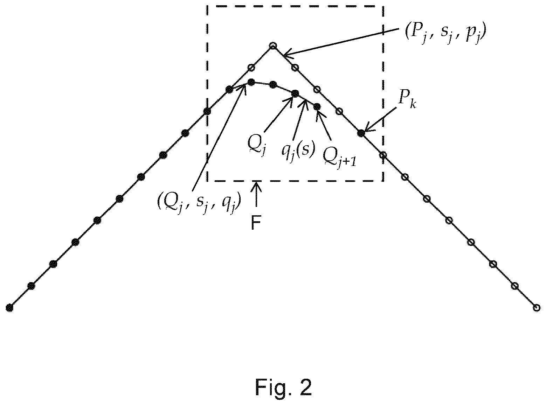

Ein Konturabschnitt j ist durch einen Startpunkt oder Konturknotenpunkt $P_j = (x_j, y_j)$, einem Parametrisierungsintervall $[0, s_j]$ und einer Konturabschnittsfunktion $p_j$ definiert, wobei $s_j$ die Bogenlänge des Konturabschnitts ist und die Konturabschnittsfunktion $p_j$ den Verlauf des Konturabschnitts beschreibt. In den Beispielen gemäß Fig. 1 und 2 sind die Funktionen $p_j$ lineare Funktionen.

Somit ist die Kontur, für die eine Grobbahn ermittelt werden soll, durch eine Funktion $(P_j, s_j, p_j)$, j = 0,..., n definiert.

Es wird angemerkt, dass anstelle einer Parametrisierung auf der Grundlage der Bahnlänge $s_j$ auch eine beliebige andere Parametrierung gewählt werden kann, beispielsweise eine Parametrierung mit der Zeit oder in kartesischen Koordinaten x, y.

Mithilfe des erfindungsgemäßen Verfahrens soll nun eine geglättete Grobbahn $(Q_j, s_j, qj)$, j = 0,..., n zum Ansteuern der niederdynamischen Antriebsvorrichtungen ermittelt werden, so dass der Abstand dieser Grobbahn einen vorgegebenen Grenzwert $\Delta$ nicht überschreitet. Die Grobbahn muss also die folgende Bedingung erfüllen:

$$\left\| p_j(s) - q_j(s) \right\| \le \Delta,$$

$s \in [0, s_j], j = 0, ..., n.$

Bei dem erfindungsgemäßen Verfahren handelt es sich um ein iteratives Verfahren. Zu Beginn wird ein Grobbahnstartknotenpunkt $Q_0$ gleich dem Startknotenpunkt Po der Kontur gesetzt. Innerhalb einer Iteration j werden zumindest die beiden folgenden Schritte durchgeführt.

In einem ersten Schritt wird ein erster Konturknotenpunkt $P_k$ mit k ≥ j gesucht, welcher entweder die erste oder die zweite der folgenden beiden Bedingungen erfüllt:

$$\sum_{l=j}^{k} s_l \le \Delta, \qquad \sum_{l=j}^{k+1} s_l > \Delta, \qquad\qquad (1)$$

$$\left\| P_k(s) - Q_j(s) \right\|_p \le \frac{\Delta}{2}, \qquad \left\| P_{k+1}(s) - Q_j(s) \right\|_p > \frac{\Delta}{2}. \qquad\qquad (2)$$

Regelmäßig wird für einen Verfahrensdurchlauf nur einer der beiden Bedingungen 1 oder 2 angewendet. Die anzuwendende Bedingung kann fest eingestellt sein, oder auf Basis von Konturcharakteristika wie Stetigkeit, Krümmungsverhalten etc. ausgewählt werden. Auch ist denkbar, dass abschnittsweise eine der beiden Bedingungen angewendet wird.

Falls für die Bedingung (1) kein solcher Punkt aufgefunden werden kann oder für die Bedingung (2) k = j ist, dann wird der zu ermittelnde Konturknotenpunkt $P_k$ als der Konturknotenpunkt $P_{j+1}$ definiert.

Das Ermitteln des Konturknotenpunkts $P_k$ mit kleinstmöglichen Indexwert k ist für p = ∞, d. h. die Maximumsnorm, in Fig. 1 illustriert. Durch die Berechnung des Abstands gemäß der Maximumsnorm weist ein Suchfenster F, innerhalb dessen sich der zu ermittelnde Konturknotenpunkt befinden muss, die Form eines Quadrats mit der Kantenlänge $\Delta$ auf. Wie in Fig. 1 gut zu erkennen ist, liegt der Punkt $P_k$ gerade noch innerhalb des Suchfensters F, während sich der nächste Punkt $P_{k+1}$ bereits außerhalb des Suchfensters befindet. Insofern wird der Konturkontenpunkt $P_k$ gesucht, der gerade noch eine Abstandsnorm erfüllt, während der nächste Punkt $P_{k+1}$ diese bereits nicht mehr erfüllt. Praktischerweise wird

zunächst der Punkt $P_{k+1}$ als der Punkt gesucht, der die Abstandsbedingung durchbricht, und damit der zuvor liegende Punkt $P_k$ identifiziert.

In einem zweiten Iterationsschritt wird mittels der Gleichung

$$S = \sum_{l=j}^{k-1} s_l \, ,$$

die Summe S der Bahnlängen $s_j$ bis $s_k$ der Konturabschnittsfunktionen $p_j$ bis $p_k$ zwischen dem Konturknotenpunkt $P_j$, dessen Indexwert j gleich dem Indexwert j des jeweiligen Ausgangsgrobbahnknotenpunkts $Q_j$ ist und dem im ersten Iterationsschritt ermittelten Konturknotenpunkt $P_k$ berechnet. Die aufsummierten Bahnlängen $s_j$ bis $s_k$ sind in Fig. 1 mit $\Sigma s_l$ gekennzeichnet. Auf der Grundlage von S, $s_j$, $Q_j$ und $P_k$ wird ein Folgegrobbahnknotenpunkt

$$Q_{j+1} = Q_j + \frac{s_j}{S}(P_k - Q_j)$$

sowie eine zugeordnete Grobbahnabschnittsfunktion

$$q_j(s) = Q_j + \frac{s}{s_j}(Q_{j+1} - Q_j)$$

ermittelt.

Die gestrichelte Linie, welche den Ausgangsgrobbahnknotenpunkt Qj und den Folgegrobbahnknotenpunkt $Q_{j+1}$ verbindet, repräsentiert die Grobbahnabschnittsfunktion $q_j$.

Anschließend wird die nächste Iteration j + 1 durchgeführt, wobei der Wert der in der Iteration j ermittelte Folgegrobbahnknotenpunkt $Q_{j+1}$ in der nächsten Iteration j + 1 den neuen Ausgangsgrobbahnknotenpunkt bildet.

In Fig. 2 ist eine weitere Kontur ($P_j$, $s_j$, $p_j$) dargestellt, für die eine Grobbahn (Qj, $s_j$, $Q_j$) ebenfalls gemäß dem erfindungsgemäßen Verfahren ermittelt wird.

Die Ermittlung jeweiliger Folgegrobbahnknotenpunkte $Q_{j+1}$ ausgehend von einem Ausgangsgrobbahnknotenpunkt $Q_j$ durch Auffinden eines gerade noch innerhalb des Suchfensters F liegenden Konturknotenpunkts $P_k$ sowie der zugehörigen Grobbahnabschnittsfunktion $q_j(s)$ erfolgt hier in der gleichen Weise, wie es mit Bezug auf Fig. 1 beschrieben wurde.

**Patentansprüche**

1. Verfahren zum Ermitteln einer Grobbahn aus einer vorgegebenen Kontur für ein Ansteuern einer Bearbeitungsmaschine, welche zumindest zwei zueinander redundante Antriebsvorrichtungen zum Ausführen sich überlagernder Bewegungen aufweist,

   wobei die Kontur durch eine Konturfunktion bestimmt ist, welche abschnittsweise zumindest durch aufsteigend indizierte Konturknotenpunkte (Po - $P_{n+1}$) und den Konturknotenpunkten (Po - $P_{n+1}$) zugeordnete Konturabschnittsfunktionen ($p_0$ - $p_n$) definiert ist und einen Konturstartknotenpunkt (Po) aufweist,
   wobei die Grobbahn durch eine Grobbahnfunktion bestimmt ist, welche abschnittsweise zumindest durch aufsteigend indizierte Grobbahnknotenpunkte (Qo - $Q_{n+1}$) definiert ist und einen Grobbahnstartknotenpunkt (Qo) aufweist,
   wobei anfangs ein Grobbahnstartknotenpunkt ($Q_0$) gleich dem Konturstartknotenpunkt (Po) gesetzt wird und nachfolgend ausgehend von einem jeweiligen Ausgangsgrobbahnknotenpunkt ($Q_j$) und beginnend bei dem Grobbahnstartknotenpunkt ($Q_0$) eine Iteration durchgeführt wird, bei welcher

   - in einem ersten Iterationsschritt aus den Konturknotenpunkten ($P_j$ - $P_n$), deren Indexwert (k) gleich oder höher wie der Indexwert (j) des jeweiligen Ausgangsgrobbahnknotenpunkts (Qj) ist, derjenige Konturknotenpunkt ($P_k$) mit kleinstmöglichem Indexwert (k) ermittelt wird, dessen Abstand von dem Ausgangsgrobbahnknotenpunkt ($Q_j$) gerade noch eine vorgegebene Abstandsbedingung erfüllt, und
   - in einem zweiten Iterationsschritt ein auf den jeweiligen Ausgangsgrobbahnknotenpunkt (Qj) folgender

jeweiliger Folgegrobbahnknotenpunkt $(Q_{j+1})$ ermittelt wird, der auf einer Verbindungslinie zwischen dem jeweiligen Ausgangsgrobbahnknotenpunkt (Qj) und dem im ersten Iterationsschritt ermittelten Konturknotenpunkt $(P_k)$ liegt, oder auf einer Verbindungslinie zwischen dem jeweiligen Ausgangsgrobbahnknotenpunkt (Qj) und einem Schwerpunkt der Abschnittskontur zwischen dem Konturknotenpunkt $(P_j)$, dessen Indexwert (j) gleich dem Indexwert (j) des jeweiligen Ausgangsgrobbahnknotenpunkt $(Q_j)$ ist, dem im ersten Iterationsschritt ermittelten Konturknotenpunkt $(P_k)$ liegt, und dessen Abstand von dem Ausgangsgrobbahnknotenpunkt (Qj) dem mit einem Faktor gewichteten Abstand des im ersten Iterationsabsch nitt ermittelten Konturknotenpunkts $(P_k)$ von dem Ausgangsgrobbahnknotenpunkt $(Q_j)$ entspricht, wobei sich der Faktor ergibt aus dem Quotienten aus der Bahnlänge $(s_j)$ derjenigen Konturabschnittsfunktion $(p_j)$, deren Indexwert (j) gleich dem Indexwert (j) des jeweiligen Ausgangsgrobbahnknotenpunkts $(Q_j)$ ist, und der Summe (S) der Bahnlängen $(s_j - s_{k-1})$ der Konturabschnittsfunktionen $(p_j - p_{k-1})$ zwischen dem Konturknotenpunkt $(P_j)$, dessen Indexwert (j) gleich dem Indexwert (j) des jeweiligen Ausgangsgrobbahnknotenpunkt $(Q_j)$ ist, und dem im ersten Iterationsschritt ermittelten Konturknotenpunkt $(P_k)$.

2. Verfahren nach Anspruch 1, **dadurch gekennzeichnet, dass** die Konturfunktion ein Spline ist, insbesondere ein Spline ersten, dritten oder fünften Grades.

3. Verfahren nach Anspruch 1 oder 2, **dadurch gekennzeichnet, dass** die vorgegebene Abstandsbedingung zumindest eine erste und eine zweite Abstandsteilbedingung umfasst, wobei der zu ermittelnde Konturknotenpunkt $(P_k)$ zumindest eine der Abstandsteilbedingungen erfüllen muss, wobei die erste Abstandsteilbedingung umfasst, dass für den zu ermittelnden Konturknotenpunkt $(P_k)$ die Summe der Bahnlängen $(s_j - s_k)$ zwischen demjenigen Konturknotenpunkt $(P_j)$, dessen Indexwert (j) gleich dem Indexwert (j) des jeweiligen Ausgangsgrobbahnknotenpunkts $(Q_j)$ ist, und dem zu ermittelnden Konturknotenpunkt $(P_k)$ kleiner oder gleich einem vorbestimmten Grenzwert $(\Delta)$ ist und die Summe der Bahnlängen $(s_j - s_{k+1})$ zwischen dem Konturknotenpunkt $(P_j)$, dessen Indexwert (j) gleich dem Indexwert (j) des jeweiligen Ausgangsgrobbahnknotenpunkts (Qj) ist, und dem auf den zu ermittelnden Konturknotenpunkt $(P_k)$ unmittelbar folgenden Konturknotenpunkt $(P_{k+1})$ größer als der vorbestimmte Grenzwert $(\Delta)$ ist, und wobei die zweite Abstandsteilbedingung umfasst, dass für den zu ermittelnden Konturknotenpunkt $(P_k)$ der Abstand zwischen dem Konturknotenpunkt $(P_j)$, dessen Indexwert (j) gleich dem Indexwert (j) des jeweiligen Ausgangsgrobbahnknotenpunkt $(Q_j)$ ist, und dem jeweiligen Ausgangsgrobbahnknotenpunkt $(Q_j)$ kleiner oder gleich der Hälfte des vorbestimmten Grenzwerts $(\Delta)$ ist und der Abstand zwischen dem auf den zu ermittelnden Konturknotenpunkt $(P_k)$ unmittelbar folgenden Konturknotenpunkt $(P_{k+1})$ und dem jeweiligen Ausgangsgrobbahnknotenpunkt (Qj) größer als die Hälfte des vorbestimmten Grenzwerts $(\Delta)$ ist.

4. Verfahren nach einem der vorhergehenden Ansprüche, **dadurch gekennzeichnet, dass** die Grobbahnfunktion ferner durch jeweilige den Grobbahnknotenpunkten $(Q_0 - Q_{n+1})$ zugeordnete Grobbahnabschnittsfunktionen $(q_0 - q_n)$ definiert ist, und dass in dem zweiten Iterationsschritt die jeweilige dem Ausgangsgrobbahnknotenpunkt (Qj) zugeordnete Grobbahnabschnittsfunktion $(q_j)$ durch eine lineare Funktion gebildet wird.

5. Verfahren nach einem der Ansprüche 1 bis 4, **dadurch gekennzeichnet, dass** die Grobbahnfunktion ferner durch jeweilige den Grobbahnknotenpunkten $(Q_0 - Q_{n+1})$ zugeordnete Grobbahnabschnittsfunktionen $(q_0 - q_n)$ definiert ist, welche mittels einer Spline-Interpolation der Grobbahnknotenpunkte $(Q_0 - Q_n)$ erzeugt worden ist.

6. Verfahren nach Anspruch 3, **dadurch gekennzeichnet, dass** der Grenzwert $(\Delta)$ einem maximalen Verfahrweg einer der Antriebsvorrichtungen entspricht.

## Claims

1. A method for ascertaining a rough trajectory from a specified contour for controlling a machine tool which has at least two mutually redundant drive devices for carrying out superimposed movements,

   wherein the contour is determined by a contour function which is defined in portions at least by contour nodal points $(P_0 - P_{n+1})$ with ascending indices and contour portion functions $(p_0 - p_n)$ assigned to the contour nodal points $(P_0 - P_{n+1})$ and has a contour starting nodal point $(P_0)$, wherein the rough trajectory is determined by a rough trajectory function which is defined in portions by rough trajectory nodal points $(Q_0 - Q_{n+1})$ with ascending indices and has a rough trajectory starting nodal point $(Q_0)$,
   wherein first of all a rough trajectory starting nodal point $(Q_0)$ is equated to the contour starting nodal point $(P_0)$ and then, on the basis of a respective rough trajectory starting nodal point $(Q_j)$ and beginning at the rough trajectory starting nodal point (Qo), an iteration is carried out in which

- in a first iteration step, on the basis of the contour nodal points ($P_j$ - $P_n$), the index value (k) of which is greater than or equal to the index value (j) of the respective rough trajectory starting nodal point ($Q_j$), that contour nodal point ($P_k$) which has the lowest possible index value (k) and the distance of which from the rough trajectory starting nodal point ($Q_j$) still just satisfies a specified distance condition is ascertained, and

- in a second iteration step, a respective following rough trajectory nodal point ($Q_{j+1}$) which follows the respective rough trajectory starting nodal point ($Q_j$) and lies on a connecting line between the respective rough trajectory starting nodal point ($Q_j$) and the contour nodal point ($P_k$) ascertained in the first iteration step, or lies on a connecting line between the respective rough trajectory starting nodal point ($Q_j$) and a centroid of the portion contour between the contour nodal point ($P_j$), whose index value (j) corresponds to the index value (j) of the respective rough trajectory starting nodal point ($Q_j$) and the contour nodal point ($P_k$) ascertained in the first iteration step, and the distance of which from the rough trajectory starting nodal point ($Q_j$) corresponds to a factor-weighted distance of the contour nodal point ($P_k$) ascertained in the first iteration step from the rough trajectory starting nodal point ($Q_j$) is ascertained, wherein the factor is obtained from the quotient of the trajectory length ($s_j$) of that contour portion function ($p_j$), the index value (j) of which is equal to the index value (j) of the respective rough trajectory starting nodal point ($Q_j$), and the sum (S) of trajectory lengths ($s_j$ - $S_{k-1}$) of the contour portion functions ($p_j$ - $p_{k-1}$) between the contour nodal point ($P_j$), the index value (j) of which is equal to the index value (j) of the respective rough trajectory starting nodal point ($Q_j$) and the contour nodal point ($P_k$) ascertained in the first iteration step.

2. A method according to Claim 1, **characterized in that** the contour function is a spline, in particular a first, third or fifth order spline.

3. A method according to Claim 1 or 2, **characterized in that** the specified distance condition comprises at least a first and a second distance subcondition, wherein the contour nodal point ($P_k$) to be ascertained must satisfy at least one of the distance subconditions, wherein the first distance subcondition requires that, for the contour nodal point ($P_k$) to be ascertained, the sum of the trajectory lengths ($s_j$ - $s_k$) between the contour nodal point ($P_j$), the index value (j) of which is equal to the index value (j) of the respective rough trajectory starting nodal point ($Q_j$), and the contour nodal point ($P_k$) to be ascertained is less than or equal to a predetermined limit value ($\Delta$) and the sum of the trajectory lengths ($s_j$ - $s_{k+1}$) between the contour nodal point ($P_j$), the index value (j) of which is equal to the index value (j) of the respective rough trajectory starting nodal point ($Q_j$), and the contour nodal point ($P_{k+1}$) immediately following the contour nodal point ($P_k$) to be ascertained is greater than the predetermined limit value ($\Delta$), and wherein the second distance subcondition requires that, for the contour nodal point ($P_k$) to be ascertained, the distance between the contour nodal point ($P_j$), the index value (j) of which equal to the index value (j) of the respective rough trajectory starting nodal point ($Q_j$), and the respective rough trajectory starting nodal point ($Q_j$) is less than or equal to half the predetermined limit value ($\Delta$) and the distance between the contour nodal point ($P_{k+1}$) immediately following the contour nodal point ($P_k$) to be ascertained and the respective rough trajectory starting nodal point ($Q_j$) is greater than half the predetermined limit value ($\Delta$).

4. A method according to one of the preceding claims, **characterized in that** the rough trajectory function is furthermore defined by respective rough trajectory portion functions ($q_o$ - $q_n$) assigned to the rough trajectory nodal points ($Q_o$ - $Q_{n+1}$) and **in that**, in the second iteration step, the respective rough trajectory portion function ($q_j$) assigned to the rough trajectory starting nodal point ($Q_j$) is formed by a linear function.

5. A method according to one of claims 1 to 4, **characterized in that** the rough trajectory function is furthermore defined by respective rough trajectory portion functions ($q_o$ - $q_n$) assigned to the rough trajectory nodal points ($Q_o$ - $Q_{n+1}$), this having been generated by means of a spline interpolation of the rough trajectory nodal points ($Q_o$ - $Q_n$).

6. A method according to claim 3, **characterized in that** the limit value ($\Delta$) corresponds to a maximum displacement of one of the drive devices.

**Revendications**

1. Procédé de détermination d'une trajectoire approximative à partir d'un contour prédéfini pour l'opération d'une machine d'usinage qui présente au moins deux dispositifs d'entraînement redondants l'un par rapport à l'autre pour exécuter des mouvements se superposant,

sachant que le contour est déterminé par une fonction de contour qui est définie section par section au moins par des points de contour ($P_o$ - $P_{n+1}$) avec indice ascendant et des fonctions de section de contour ($p_o$ - $p_n$) attribuées aux points de contour ($P_o$ - $P_{n+1}$) et un point de départ de contour ($P_o$),

sachant que la trajectoire approximative est déterminée par une fonction de trajectoire approximative qui est définie partiellement au moins par des points de trajectoire approximative ($Q_o$ - $Q_{n+1}$) à indice ascendant et présente un point de départ de trajectoire approximative ($Q_o$),

sachant qu'au début, un point de départ de trajectoire approximative ($Q_o$) est choisi identique au point de départ de contour ($P_o$), qu'ensuite, une itération est réalisée en partant d'un point de trajectoire approximative initiale ($Q_j$) et commençant par le point de départ de trajectoire approximative ($Q_o$), pour laquelle

- lors d'une première étape d'itération à partir des points de contour ($P_j$ - $P_n$), dont la valeur d'indice est égale ou supérieure à la valeur d'indice (j) du point respectif de trajectoire approximative initiale ($Q_j$), est déterminé le point de contour ($P_k$) avec la valeur d'indice minimale (k) dont l'écart par rapport au point de trajectoire approximative initiale ($Q_j$) remplit encore de justesse une condition d'écart prédéfinie, et

- lors d'une seconde étape d'itération est déterminé un point respectif de trajectoire approximative consécutive ($Q_{j+1}$) suivant le point respectif de trajectoire approximative initiale ($Q_j$), lequel se situe sur une ligne reliant le point respectif de trajectoire approximative initiale ($Q_j$) et le point de contour ($P_k$) déterminé dans une première étape d'itération, ou sur une ligne reliant le point respectif de trajectoire approximative initiale ($Q_j$) et un centroïde du contour partiel entre le point de contour ($P_j$) dont la valeur d'indice (j) est égale à la valeur d'indice (j) du point respectif de trajectoire approximative initiale ($Q_j$) et le point de contour ($P_k$) déterminé dans la première étape d'itération, et dont l'écart par rapport au point de trajectoire approximative initiale ($Q_j$) correspond à l'écart pondéré d'un coefficient entre le point de contour ($P_k$) déterminé dans la première section d'itération et le point de trajectoire approximative initiale ($Q_j$), sachant que le coefficient est égal au quotient entre la longueur de trajectoire ($s_j$) de la fonction de section de contour ($p_j$) dont la valeur d'indice (j) est égale à la valeur d'indice (j) du point respectif de trajectoire approximative initiale ($Q_j$) et la somme (S) des longueurs de trajectoire ($s_j$ - $S_{k-\backslash 1}$) des fonctions de section de contour ($p_j$ - $p_{k-1}$) entre le point de contour ($P_j$) dont la valeur d'indice (j) est égale à la valeur d'indice (j) du point respectif de trajectoire approximative initiale ($Q_j$), et le point de contour ($P_k$) déterminé dans la première étape d'itération.

**2.** Procédé selon la revendication 1, **caractérisé en ce que** la fonction de contour est une spline, notamment une spline de degré un, trois ou cinq.

**3.** Procédé selon la revendication 1 ou 2, **caractérisé en ce que** la condition d'écart prédéfinie comprend au moins une première et une seconde conditions partielles d'écart, sachant que le point de contour à déterminer ($P_k$) doit remplir au moins une des conditions partielles d'écart, sachant que la première condition partielle d'écart comprend le fait que pour le point de contour à déterminer ($P_k$), la somme des longueurs de trajectoire ($s_j$ - $s_k$) entre le point de contour ($P_j$) dont la valeur d'indice (j) est égale à la valeur d'indice (j) du point respectif de trajectoire approximative initiale ($Q_j$), et le point de contour à déterminer ($P_k$) est inférieure ou égale à une valeur limite prédéfinie ($\Delta$) et que la somme entre les longueurs de trajectoire ($s_j$ - $s_{k+1}$) entre le point de contour ($P_j$) dont la valeur d'indice (j) est égale à la valeur d'indice (j) du point respectif de trajectoire approximative initiale ($Q_j$) et le point de contour ($P_{k+1}$) suivant immédiatement le point de contour ($P_k$) à déterminer est supérieure à la valeur limite prédéfinie ($\Delta$), et sachant que la seconde condition partielle d'écart comprend le fait que pour le point de contour à déterminer ($P_k$), l'écart entre le point de contour ($P_j$) dont la valeur d'indice (j) est égale à la valeur d'indice (j) du point respectif de trajectoire approximative initiale ($Q_j$), et le point respectif de trajectoire approximative initiale ($Q_j$) est inférieur ou égal à la moitié de la valeur limite prédéfinie ($\Delta$) et que l'écart entre le point de contour ($P_{k+1}$) suivant immédiatement le point de contour ($P_k$) à déterminer et le point respectif de trajectoire approximative initiale ($Q_j$) est supérieur à la moitié de la valeur limite prédéfinie ($\Delta$).

**4.** Procédé selon une des revendications précédentes, **caractérisé en ce que** la fonction de trajectoire approximative est définie en outre par des fonctions respectives de section de trajectoire approximative ($q_o$ - $q_n$) attribuées aux points de trajectoire approximative ($Q_o$ - $Q_{n+1}$), et que dans la seconde étape d'itération, la fonction respective de section de trajectoire approximative ($q_j$) attribuée au point de trajectoire approximative initiale ($Q_j$) est formée par une fonction linéaire.

**5.** Procédé selon une des revendications 1 à 4, **caractérisé en ce que** la fonction de trajectoire approximative est définie en outre par des fonctions respectives de section de trajectoire approximative ($q_o$ - $q_n$) attribuées aux points de trajectoire approximative ($Q_o$ - $Q_{n+1}$), lesquelles ont été créées au moyen d'une interpolation de type spline des points de trajectoire approximative ($Q_o$ - $Q_n$).

**6.** Procédé selon la revendication 3, **caractérisé en ce que** la valeur limite ($\Delta$) correspond à une course maximale d'un des dispositifs d'entraînement.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10355614 B4
- EP 0594699 B1

- EP 1963935 B1

**In der Beschreibung aufgeführte Nicht-Patentliteratur**

- Steuerung von Werkzeugmaschinen mit redundant-en Achsen. **HERREN MARCO BOCK.** Fachbereich Mathematik und Informatik, Physik. Geographie der Justus-Liebig-Universität Gießen, August 2010